# EUROPEAN PATENT APPLICATION

(11) **EP 1 662 404 A1**
(43) Date of publication of application: **31.05.2006**
(21) Application number: 04027954.9
(22) Date of filing: 25.11.2004
(51) Int. Cl.: G06F 17/30

(54) **Method for displaying multiple frames on small screen of communication device**

(71) Applicant: Inventec Appliances Corp., Wugu Shiang, Taipei (TW)
(72) Inventor: Lai, Cheng-Shing, Wugu Shiang Taipei (TW); Yang, Sheng-Hong, Nanking (CN); Ding, Jian-Ning, Nanking (CN)
(74) Representative: Haft, von Puttkamer, Berngruber, Czybulka

(57) **Abstract**

The present invention discloses a method for displaying multiple frames on a small screen of a communication device, which comprises the steps of setting display width for all subwebs and root web of a webpage to its maximum while the communication device is used for browsing the webpage on the Internet, hiding the subwebs and the root web, and then setting a dialog box on the screen of the communication device. The dialog box comprises at least one option provided for selecting the subwebs and the root web, such that the corresponding selected subweb or root web will be displayed on the screen for browsing according to a selected option, and each subweb or root web can be displayed completely on the small screen of the communication device according to a selected instruction.

## Description

### FIELD OF THE INVENTION

The present invention relates to a method for displaying multiple frames on a small screen of a communication device, more particularly to a method for displaying multiple frames on a small screen of a communication device such that each subweb or root web can be displayed in full on the small screen of the communication device according to a selected instruction.

### BACKGROUND OF THE INVENTION

Internet is an emerging information carrier and popular medium. Since the databases linked to Internet have a global coverage and provide plentiful information resources, Internet becomes favorable and popular featuring an amazingly fast development. The digital mobile phone (or handset) successfully developed in the '80s allows users to communicate by phones while they are moving, which is adapted to the fast pace of the present world and the high demand for mobility. Therefore, global mobile phones are developed in a fast manner, and many wireless networking devices including a wireless application protocol (WAP) handset in compliance with the wire application protocol were developed in recent years for connecting to Internet. However, there is a limitation for these WAP handsets to browser a webpage, since the small screen of the handset does not allow users to browse several webpages at the same time.

At present, many websites use a multiple-frame webpage technology, so that users can browse several webpages in a big screen at the same time, but the web browser used on a small-screen handset comes with a small screen and it may cause a loss of balance of some embedded frames if the method supporting embedded multiple frames on a big screen is adopted. If the technology not supporting embedded multiple frames is adopted, then it will cause incompleteness and inconvenience to user's browsing information. Therefore, it is necessary to design and develop a novel method to support and conveniently embed multiple-frame webpage on the web browser of a small-screen device.

### SUMMARY OF THE INVENTION

In view of the aforementioned shortcomings of the prior-art that the prior-art handset is unable to browse several webpages simultaneously, the inventor of the present invention based on years of experience and professional knowledge on communication devices to conduct researches and experiments and finally invented a method of displaying multiple frames on a small screen of a communication device in accordance with the invention to overcome the shortcomings of the prior art.

The primary objective of the present invention is to provide a method for displaying multiple frames on a small screen of a communication device. Each subweb or root web is displayed in full on a small screen of a communication device according to the selected or clicked instruction. If the communication device such as a mobile phone is used for browsing a webpage on the Internet, the display width for all subwebs and the root web of the webpage is set to its maximum, and the subwebs and the root web are hidden, and then a dialog box is set on the screen of the communication device. The dialog box comprises at least one option provided for selecting or clicking the subwebs and the root web, such that the corresponding selected or clicked subweb or root web will appear on the screen for browsing according to the clicked option. In the meantime, the subwebs or root web can be selected or clicked as needed to achieve the purpose of displaying multiple frames on a small-screen communication device.

Another objective of the present invention is to provide a method for displaying multiple frames on the small screen of a communication device, such that the subwebs or each root web can be displayed in full one by one on the small screen of the communication device by a turnover (scroll) function. When a communication device (such as a mobile phone) is used for browsing a webpage on the Internet, the width for displaying all subwebs and root web of the webpage is set to its maximum, and all subwebs and the root web are arranged in a top-down order. In order words, a subweb comes after another subweb, so that the communication device can display all subwebs and the root web in full one by one on the screen for browsing according to the inputted turnover (scroll) instruction. Therefore, the full subwebs or the root web can be browsed on the screen. In the meantime, all required subwebs or root web can be browsed one by one to achieve the purpose of displaying multiple frames on a small screen of the communication device.

### BRIEF DESCRIPTION OF THE DRAWINGS

FIG. 1 is an illustrative view of the frame of the present invention.
FIG. 2 is an illustrative view of the frame according to another preferred embodiment of the present invention.
FIG. 3 is an illustrative view of embedded webpage with multiple frames being displayed on a big screen according to the present invention.
FIG. 4 is an illustrative view of embedded webpage with multiple frames being displayed on a small screen according to the present invention.

### DETAILED DESCRIPTION OF THE PREFERRED EMBODIMENTS

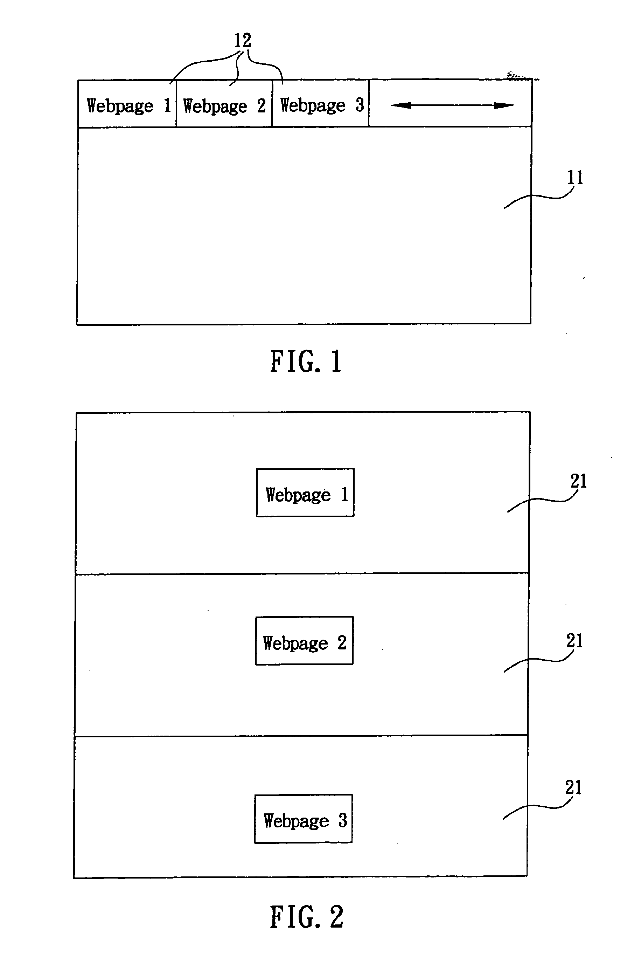

Please refer to FIG. 1 for the method of displaying multiple frames on a small screen of a communication device according to the present invention. If the method uses the communication device such as a mobile phone and a personal digital assistant (PDA) to browse a webpage on the Internet, the display width of all subwebs and the root web of the webpage is set to its maximum, and the subwebs and root web are hidden, and then a dialog box 11 is set on the screen of the communication device. The dialog box 11 comprises at least an option 12 for clicking and selecting the subwebs and the root web, such that the communication device can display the subweb or root web corresponding to the clicked option 12 for browsing on the screen. Therefore, the complete subweb or root web can be browsed on the screen; and in the meantime, the subweb or root web can be selected or clicked as needed to achieve the purpose and function of displaying multiple frames on a small screen of the communication device.

In this method, the arrow keys including the up, down, left or right keys (not shown in the figure) on the keyboard of the communication device are used to click or select the options 12 or an external joystick of the communication device is used to control the cursor on the screen for clicking and selecting the options 12 as to display all subwebs and the root web one by one. After the data of all subwebs and the root web are updated, the options 12 can be selected or clicked to display all subwebs and the root web one by one.

Please refer to FIG. 2 for another preferred embodiment of the present invention. When the method uses the communication device such as a mobile phone, a personal digital assistant and the like to browse a webpage 21 on the Internet, the display width of all subwebs and the root web of the webpage 21 is set to its maximum, and the subwebs and root web are arranged in a top-down order; in other words, one webpage 21 follows another webpage 21, such that the communication device displays all complete subwebs and the root web one by one on the screen according to the inputted turnover (scroll) instruction. Therefore, the complete subwebs or root web can be browsed on the screen while all required subwebs or root web can be browsed one by one to achieve the purpose and function of displaying multiple frames on a small screen of the communication device.

In this method, the arrow keys including the up and down keys (not shown in the figure) on the keyboard of the communication device can be used to move the display of all subwebs and the root web up and down. After the data of all subwebs and the root web is updated, the arrow keys (up and down keys) can be used to move the display of all subwebs and the root web up and down as to browse the updated subwebs and root web.

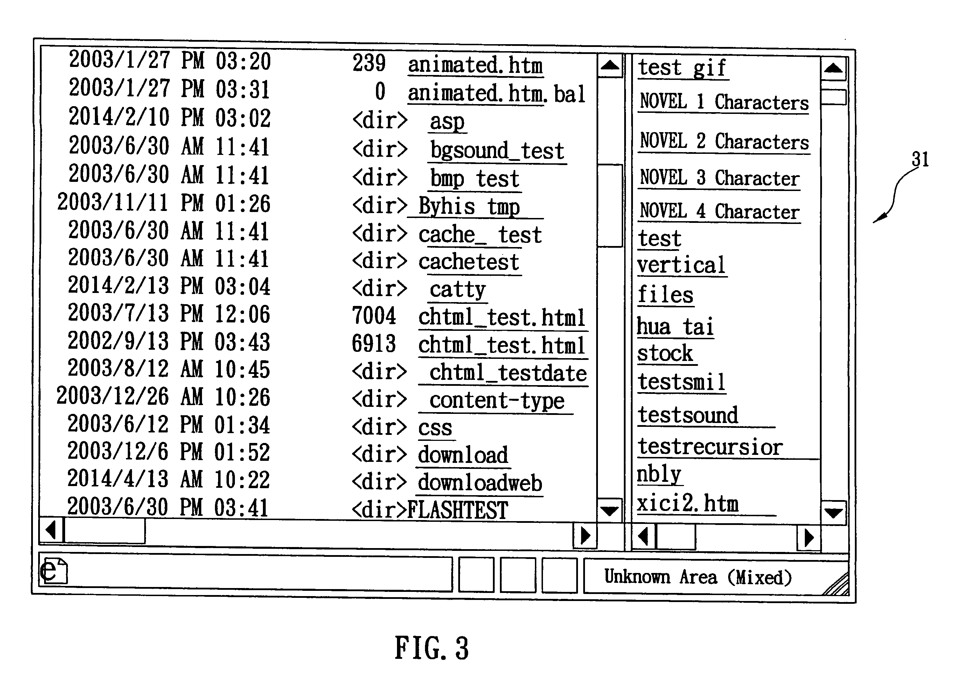

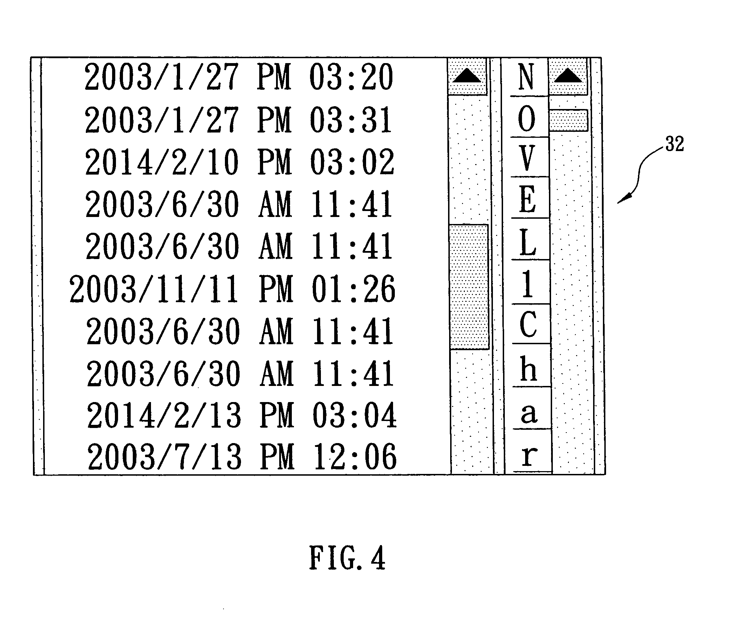

In view of the description above, many web users are using embedded web multiple frame technology, so that users can browse several webpages 31 (as shown in FIG. 3) in a large screen at the same time, but the web browser used for the small screen of a handset is limited by its small screen. If such method is applied directly to the large screen browser that supports the embedded multiple frames, then the size of some of the embedded frames will lose its control, which is inconvenient for browsing the webpage 32 as shown in FIG. 4. The method of displaying multiple frames on a small screen of the communication device according to the present invention can overcome the foregoing shortcomings, which allows users to browse the complete subwebs or root web on the screen while browsing all required subwebs and the root web one by one as to achieve the function of displaying multiple frames on a small screen of the communication device and make the browsing more convenient.

In summation of the description of the above, the present invention herein enhances the performance than the conventional structure and further complies with the patent application requirements and is submitted to the Patent and Trademark Office for review and granting of the commensurate patent rights.

While the invention has been described by means of specific embodiments, numerous modifications and variations could be made thereto by those skilled in the art without departing from the scope and spirit of the invention set forth in the claims.

## Claims

1. A method for displaying multiple frames on small screen of communication device; comprising the steps of:
setting the display width of all subwebs and a root web to its maximum when a communication device being used for browsing a webpage on the Internet; hiding said subwebs and said root web;
setting a dialog box on a screen of said communication device, and said dialog box comprising at least one option for selecting said subwebs and
said root web; and
said communication device displaying said subwebs and said root web corresponding to said option on said screen for browsing according to said selected option.

2. The method for displaying multiple frames on small screen of communication device of claim 1, wherein said communication device comprise a keyboard, and said keyboard comprises a plurality of arrow keys including up, down, left and right keys for selecting said option.

3. The method for displaying multiple frames on small screen of communication device of claim 1, wherein said communication device comprises an external joystick for controlling a cursor on said screen and selecting said option.

4. The method for displaying multiple frames on small screen of communication device of claim 1, wherein said communication device is a mobile phone.

5. A method for displaying multiple frames on small screen of communication device; comprising the steps of:
setting the display width of all subwebs and a root web to its maximum when a communication device being used for browsing a webpage on the Internet;
arranging said subwebs and said root web in an order of one webpage being followed by another webpage; and
said communication device displaying said subwebs and said root web completely one by one on said screen for browsing according to an inputted turnover (scroll) instruction.

6. The method for displaying multiple frames on small screen of communication device of claim 5, wherein said communication device comprises arrow keys including an upper and a lower keys for moving the display of said subwebs and said root web up and down.

7. The method for displaying multiple frames on small screen of communication device of claim 5, wherein said communication device is a mobile phone.
